# EUROPÄISCHE PATENTSCHRIFT

(11) **EP 1 056 644 B1**
(45) Veröffentlichungstag und Bekanntmachung des Hinweises auf die Patenterteilung: **06.11.2002**
(21) Anmeldenummer: 99917754.6
(22) Anmeldetag: 19.02.1999
(51) Int. Cl.: B64D 17/34

(54) **FALLSCHIRM MIT AKTIVER ENTFALTUNG**
PARACHUTE WITH ACTIVE DEPLOYMENT
PARACHUTE A DEPLOIEMENT ACTIF

(30) Priorität: 25.02.1998 DE 19807671
(43) Veröffentlichungstag der Anmeldung: 06.12.2000
(73) Patentinhaber: AUTOFLUG GMBH, D-25462 Rellingen (DE)
(72) Erfinder: HANSEN, Holger, D-20357 Hamburg (DE)
(74) Vertreter: Müller, Karl-Ernst, Dr., Dipl.-Ing.
(86) Internationale Anmeldenummer: DE9900537
(87) Internationale Veröffentlichungsnummer: WO99043546

(56) Entgegenhaltungen:
- DE-A- 3 622 456
- FR-A- 858 140
- US-A- 2 736 524
- US-A- 5 209 436

## Beschreibung

Die Erfindung betrifft einen Fallschirm bestehend aus einer einen Scheitel und eine Basis aufweisenden Fallschirmkappe sowie aus an der Basis angeschlagenen Fangleinen zum Halten des mittels des Fallschirmes abzubremsenden Objektes, wobei der Fallschirm für seine Bereithaltung durch Zusammenlegen der Fallschirmkappe sowie seiner Fangleinen eine Packfaltung aufweist. Ein derartiger Fallschirm ist aus der US-A-2736524 bekannt.

Soweit die Fallschirmkappe eines derartigen Fallschirms im Rahmen ihrer Bereithaltung für den Einsatz gepackt ist, geschiebt die dazu verwendete Packfaltung üblicherweise dergestalt, daß die Fallschirmkappe mit Tragleinen in einer gestreckten Lage ausgelegt und dann ausgehend von dem Scheitel zur Basis fortlaufend gefaltet wird, so daß mit Beginn der Entfaltung die Luftströmung von der Basis her in die Fallschirmkappe eintreten und der daraus resultierende Staudruck für die Entfaltung der Kappe sorgen kann. Aufgrund dieser Packart wird der Staudruck erst wirksam, wenn die Fallschirmkappe einschließlich der das abzubremsende Objekt tragenden Fangleinen eine gestreckte Lage eingenommen hat.

Mit dem bekannten Fallschirm ist der Nachteil verbunden, daß im Zusammenhang mit der Streckung der Fallschirmkappe einschließlich Fangleinen es zu einem Entfaltungsstoß bzw. Streckstoß kommt, der in Abhängigkeit von der im Augenblick der Entfaltung herrschenden Geschwindigkeit eine erhebliche Belastung des Fallschirmes darstellt. Es kommt hinzu, daß bei hoher Absetz- und damit verbundener hoher Strömungsgeschwindigkeit das Phänomen auftreten kann, daß die zum Aufblähen der aus einer Packhülle ausgezogenen und gestreckten Fallschirmkappe erforderliche Luftmasse der Strömungsgeschwindigkeit des von der Basis zum Scheitel strömenden ersten Luftstoßes nicht folgt, so daß sich die Basis der Fallschirmkappe wieder schließt und die Entfaltung unterbleibt.

Ein weiterer Nachteil ergibt sich daraus, daß je nach dem Einsatzzweck des Fallschirmes, beispielsweise als Flugzeugbremse, Stabilisierungsschirm, Lastenfallschirm oder Personen-Rettungsfallschirm, und der daraus sich ergebenden Absetzgeschwindigkeit die Fallschirmkappe jeweils einen angepaßten, unterschiedlichen Gewebeaufbau beispielsweise in Form eines Bänderschirmes oder in Form von unterschiedlichen Kappen-Materialien mit unterschiedlichen Luftdurchlässigkeiten aufweisen muß, so daß für unterschiedliche Einsatzzwecke auch unterschiedliche Fallschirme vorzuhalten sind.

Der Erfindung liegt daher die Aufgabe zugrunde, einen Fallschirm der eingangs genannten Art zur Verfügung zu stellen, der einen breiten Einsatzbereich aufweist und in dem vorgegebenen Einsatzbereich eine sichere Entfaltung gewährleistet.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Packfaltung der Fallschirmkappe aus ausgehend von der aufgeblähten Flugform des Fallschirmes über den gesamten Umfang der Fallschirmkappe von der Basis über die Höhe der Fallschirmkappe bis zum Scheitel erfolgenden Raffens des Kappengewebes hergestellten konzentrischen Raffalten besteht.

Mit der Erfindung ist der Vorteil verbunden, daß aufgrund der über die Höhe der Fallschirmkappe erfolgenden Raffung der Fallschirmkappe in einzelne Raffalten die Basis der Fallschirmkappe jeweils in Anströmrichtung offen bleibt, so daß auch bei hoher Strömungsgeschwindigkeit eine sichere Entfaltung gegeben ist, da der mit Beginn der Entfaltung auf den Scheitel der Fallschirmkappe einwirkende Staudruck für ein sequentielles Abrollen der einzelnen Raffalten sorgt, und zwar jeweils im Gleichgewicht mit dem abzubremsenden Objekt. Daraus ergibt sich in vorteilhafter Weise eine dem jeweils wirkenden Staudruck umgekehrt proportionale Entfaltung der Fallschirmkappe, indem bei hohen Anströmgeschwindigkeiten nur eine kleine Fallschirmfläche entfaltet bzw. durch Abrollen der Raffalten freigegeben wird, während bei geringer Anströmgeschwindigkeit die Freigabe einer großen Fallschirmfläche erfolgt. Damit ist die Sicherheit des Fallschirmes insgesamt verbessert, weil damit auch bei einem Absetzen in geringer Höhe bei kleiner Geschwindigkeit eine sofortige vollständige Öffnung des Fallschirmes ohne zusätzliche Entfaltungsmittel gewährleistet ist. Mit der aufeinanderfolgenden Freigabe der konzentrischen Raffalten bei der Entfaltung ist weiterhin der Vorteil verbunden, daß die an der Basis der Fallschirmkappe angeschlagenen Fangleinen sich entsprechend der jeweiligen Entfaltung der Fallschirmkappe nach und nach verlängern, so daß ein Entfaltungs- bzw. Streckstoß weitgehend vermieden ist bzw. nur noch in sehr abgemilderter Form auftritt.

Dem jeweiligen Einsatzbereich eines Fallschirmes kann nach einem Ausführungsbeispiel der Erfindung dadurch Rechnung getragen werden, daß jeweils eine Mehrzahl von konzentrischen Raffalten durch diese umfassende Steuerleinen zu einzelnen Entfaltungszonen aneinander gekoppelt sind. Somit ist es möglich, bereits beim Packen des Fallschirmes Öffnungssequenzen vorzugeben, wobei die Steuerleinen zur Herstellung der einzelnen Entfaltungszonen eine unterschiedliche Bruchlast aufweisen können. Damit ist die sequentielle Entfaltung der so gebildeten Entfaltungszonen als Reaktion auf einen erwarteten Staudruck bei der Entfaltung des Fallschirmes voreinstellbar.

In vorteilhafter Weise eröffnet die Erfindung die bisher nicht gegebene Möglichkeit, unterschiedliche Fallschirmkonstruktionen in einer einzigen Fallschirmkappe zusammenzufassen, indem nach einem Ausführungsbeispiel der Erfindung vorgesehen ist, daß die Fallschirmkappe aus einen unterschiedlichen Gewebeaufbau aufweisenden Abschnitten besteht und die jeweiligen Abschnitte zu einer zugeordneten Entfaltungszone zusammengefaßt sind. Somit kann je nach dem Einsatzprofil des Fallschirmes ein unterschiedlicher Gewebeaufbau, beispielsweise in Form eines Bänderschirmes oder mit einem eine unterschiedliche Porosität aufweisenden Gewebe für jede einzelne der Entfaltungszonen ausgeführt sein, so daß durch eine gezielte, zeitversetzte bzw. durch den jeweils herrschenden Staudruck bedingte Freigabe der einzelnen Entfaltungszonen die Entfaltung des Fallschirmes in jeder Geschwindigkeitsstufe in dem gewünschten Umfang erfolgt und wirksam wird.

Dabei ist nach einem Ausführungsbeispiel der Erfindung vorgesehen, daß die zusammengelegten Fangleinen an der jeweils untersten Raffalte der einzelnen Entfaltungszonen angebunden sind. Hierdurch ist sichergestellt, daß eine Verlängerung der Fangleinen nur in demjenigen Umfang erfolgt, wie die Raffalten für eine Entfaltung der Fallschirmkappe freigegeben werden.

Nach einem bevorzugten Ausführungsbeispiel der Erfindung ist vorgesehen, daß im Scheitel der Fallschirmkappe eine Plattform angeordnet ist. Die Anordnung dieser Plattform eröffnet weitere vorteilhafte Ausführungsformen der Erfindung. So kann vorgesehen sein, daß die Raffalten auf der Plattform abgelegt und von der Plattform zur Entfaltung der Fallschirmkappe abrollbar sind. Damit ergibt sich beim Packen der Fallschirmkappe eine gut handhabbare verpackte Fallschirmeinheit. Beim Ausbringen des gepackten Fallschirmes bei dessen Einsatz baut sich gegen die Plattform der für die Entfaltung des Fallschirmes notwendige Staudruck in einer berechenbaren Größe auf.

Weiterhin kann nach einem Ausführungsbeispiel der Erfindung vorgesehen sein, daß auf der Plattform eine Steuervorrichtung zur gezielten Freigabe der Raffalten angeordnet ist, wobei an die Steuervorrichtung Leinenschneider zum gesteuerten Durchtrennen der die Entfaltungszonen zusammenhaltenden Steuerleinen angeschlossen sein können. Die damit mögliche gezielte Freigabe der Raffalten schließt auch die Freigabe der angeschlossenen Fangleinen ein.

Nach einem Ausführungsbeispiel der Erfindung ist vorgesehen, daß die Steuervorrichtung einen Strömungsmesser aufweist. Damit ist die Möglichkeit gegeben, daß die Steuervorrichtung entsprechend der tatsächlich herrschenden Geschwindigkeit bzw. des damit einhergehenden Staudrucks die Freigabe der Entfaltungszonen und der Fangleinen steuert.

Alternativ kann auch vorgesehen sein, daß die Steuervorrichtung einen Datenspeicher mit darin gespeicherten, den Entfaltungsablauf der Fallschirmkappe bestimmenden Daten aufweist. Hierbei kann in dem Datenspeicher eine voreingestellte sequentielle Öffnung der Fallschirmkappe als fixer Ablauf oder in Abhängigkeit von den vorberechneten Entfaltungsbedingungen eingespeichert sein, wobei sich die Anzahl der jeweils freizugebenden Entfaltungszonen aus der Notwendigkeit der zu überbrückenden Geschwindigkeitsspanne ergibt und je nach Einsatzbereich des Fallschirmes unterschiedlich vorgegeben sein kann.

In der Zeichnung ist ein Ausführungsbeispiel der Erfindung wiedergegeben, welches nachstehend beschrieben ist. Es zeigen:
- Fig. 1: einen Fallschirm mit angehängtem abzubremsenden Objekt nach dem Auswurf vor dem Beginn der Entfaltung der Fallschirmkappe,
- Fig. 2: eine erste Stufe der Entfaltung der Fallschirmkappe mit Entfaltung einer ersten Faltungszone,
- Fig. 3: den Gegenstand der Figur 2 bei Entfaltung einer zweiten Faltungszone,
- Fig. 4: den Gegenstand der Figur 3 bei Entfaltung einer zusätzlichen Entfaltungszone.

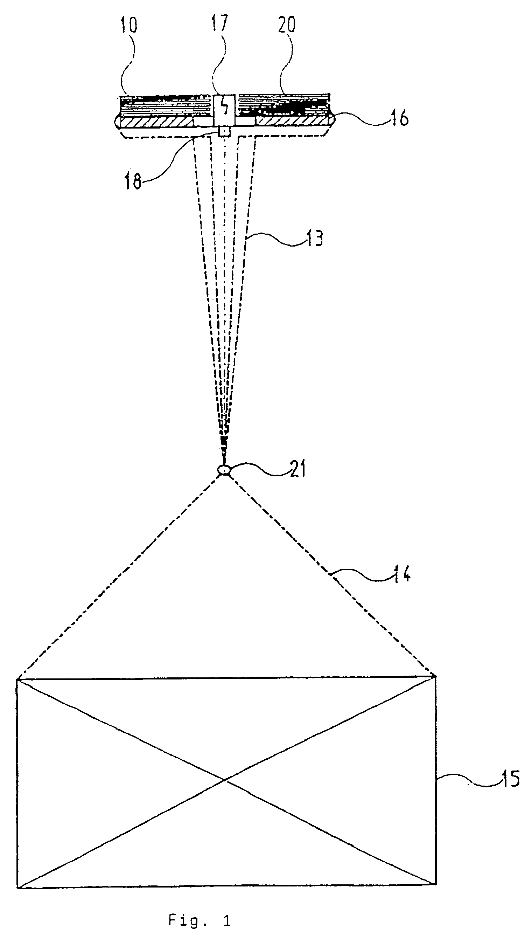

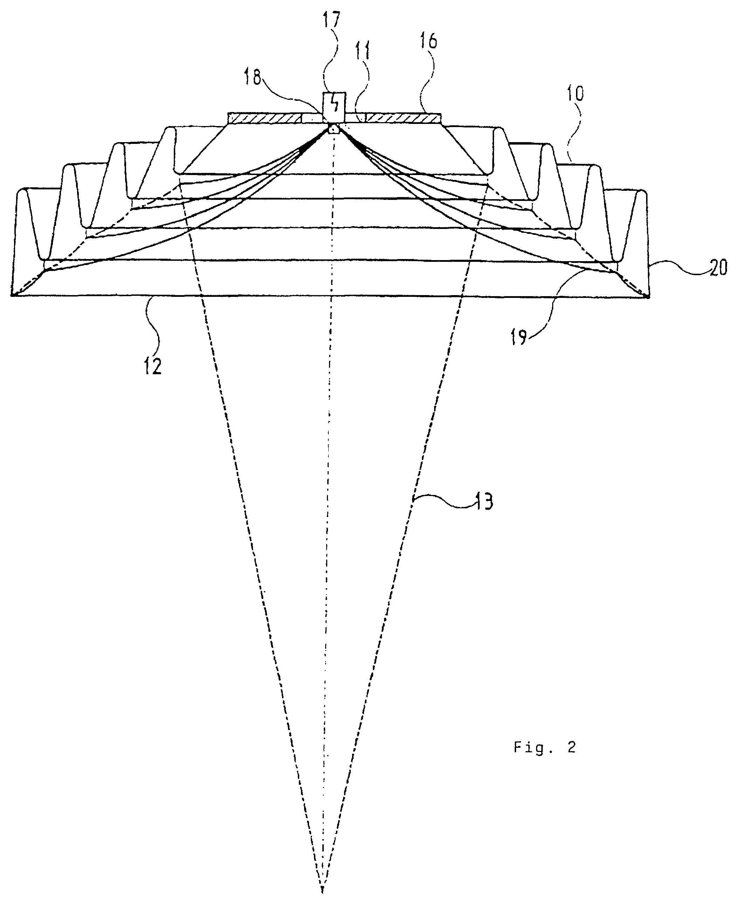

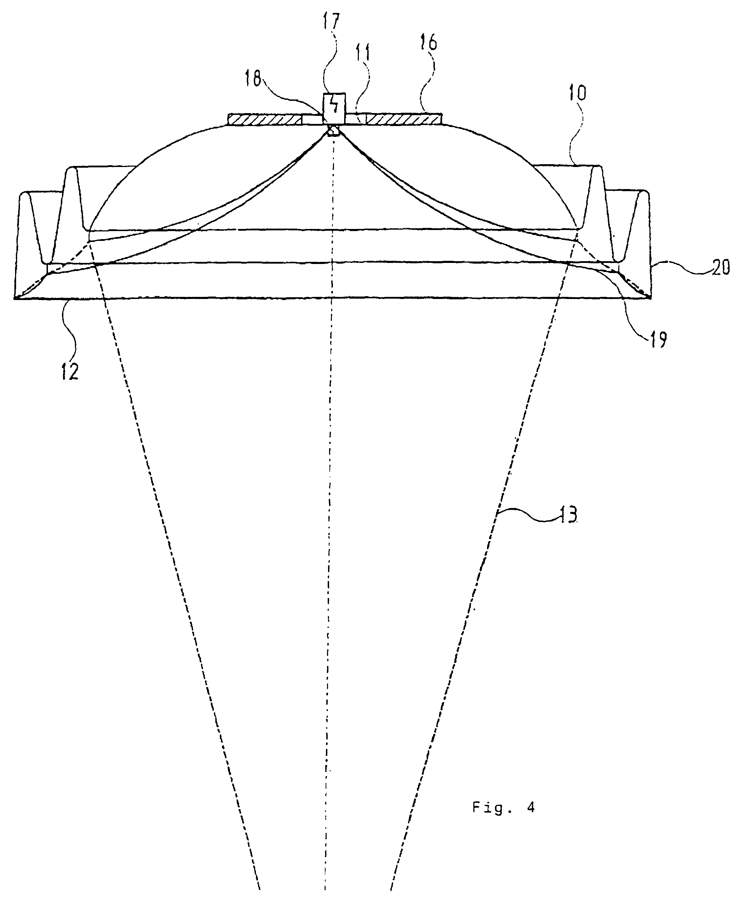

Aus Figur 1 ist ein Fallschirm nach dessen Auswurf ersichtlich, in welchem sich eine Trennung des abzubremsenden Objektes 15 von der Fallschirmkappe 10 vollzogen hat. Das abzubremsende Objekt 15 ist über Tragleinen 14 an einen Fangleinenanschluß 21 angeschlossen, von dem aus Fangleinen 13 zur Fallschirmkappe 10 führen und hier an der Basis 12 der Fallschirmkappe angeschlagen ist. Aus den Figuren 2 bis 4 ist die Zuordnung der Basis 12 der Fallschirmkappe 10 zu deren Scheitel 11 ersichtlich. In dem in Figur 1 dargestellten Packzustand ist die Fallschirmkappe durch Raffung in Raffalten 20 gelegt, wobei die Raffalten 20 auf einer im Scheitel 11 der Fallschirmkappe 10 angeordneten Plattform 16 abgelegt sind. Die Plattform 16 trägt eine Steuervorrichtung 17, die einen durch die Plattform 16 in den Bereich der entfalteten Fallschirmkappe (Figuren 2 bis 4) vorstehenden Strömungsmesser 18 aufweist. Einzelne Raffalten 20 sind durch Steuerleinen 19 zu Entfaltungszonen zusammengefaßt, so daß sich die in den Figuren 2 bis 4 im einzelnen dargestellte sequentielle Entfaltung der Fallschirmkappe 10 ergibt.

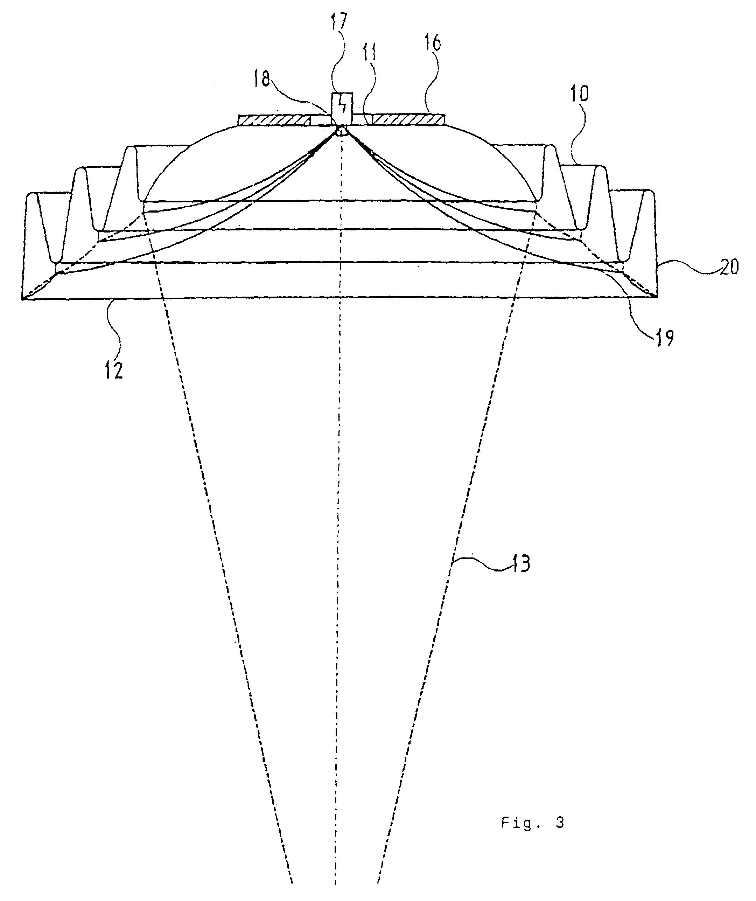

Bei dem dargestellten Ausführungsbeispiel erfolgt nach dem Ausbringen des Fallschirmes und der in Figur 1 dargestellten Vorstreckung des Systems eine Messung der Strömungsgeschwindigkeit durch den Strömungsmesser 18 bzw. eine Bestimmung des Staudrucks in der Steuervorrichtung 17, wobei die Steuervorrichtung 17 in der in Figur 2 dargestellten Weise eine erste Entfaltungszone durch Freigabe der entsprechenden Raffalten für die Entfaltung freigibt. Die übrigen Entfaltungszonen bleiben durch die entsprechend angeordneten Steuerleinen 19 miteinander verbunden in geraffter Form erhalten, so daß nur eine begrenzte Öffnungsfläche der Fallschirmkappe 10 in der in Figur 2 dargestellten Entfaltungsstufe zur Verfügung steht. Bei Erreichen der Übergangsgeschwindigkeit für die zweite Stufe gibt die Steuervorrichtung 17 mittels eines vorgesehenen Leinenschneiders und durch Trennung der zugehörigen Steuerleinen 19 die folgende Entfaltungszone frei, so daß sich die für das Abbremsen zur Verfügung stehende Fläche der Fallschirmkappe 10 entsprechend dem in Figur 3 dargestellten Stadium vergrößert. Bei weiter sich vermindernder Geschwindigkeit gibt die Steuervorrichtung 17 dann die nachfolgende Entfaltungszone frei. Während der insoweit sequentiellen Entfaltung der Entfaltungszonen verlängern sich die Fangleinen 13 um das Maß der freigegebenen Raffalten.

Je nach der von dem Strömungsmesser 18 aufgenommenen Strömungsgeschwindigkeit kann somit in Abhängigkeit von der tatsächlich herrschenden Geschwindigkeit eine gezielte Entfaltung der Fallschirmkappe 10 erfolgen, wobei bei entsprechend niedriger Geschwindigkeit sogleich ein Durchtrennen aller Steuerleinen 19 möglich ist, so daß bei entsprechend niedriger Geschwindigkeit eine vollständige Entfaltung der Fallschirmkappe 10 ohne eine vorherige sequentielle Entfaltung möglich ist.

Alternativ zu dem in Figur 1 dargestellten Beispiel einer Strömungsmeßvorrichtung kann in der Steuervorrichtung auch von vornherein die Entfaltungssequenz der einzelnen Entfaltungszonen elektronisch festgelegt sein; es ist auch ein entsprechender Datenspeicher möglich, in dem eine Pre-Parametrierung der erforderlichen Daten nach Geschwindigkeit und Höhe eingespeichert sein kann, aufgrund derer die Steuervorrichtung die Entfaltungszonen freigibt.

## Patentansprüche

1. Fallschirm bestehend aus einer einen Scheitel (11) und eine Basis (12) aufweisenden Fallschirmkappe (10) sowie aus an der Basis (12) angeschlagenen Fangleinen (13) zum Halten des mittels des Fallschirmes abzubremsenden Objektes (15) wobei der Fallschirm für seine Bereithaltung durch Zusammenlegen der Fallschirmkappe (10) sowie seiner Fangleinen (13) eine Packfaltung aufweist, **dadurch gekennzeichnet, daß** die Packfaltung der Fallschirmkappe (10) aus ausgehend von der aufgeblähten Flugform des Fallschirmes über den gesamten Umfang der Fallschirmkappe (10) von der Basis (12) über die Höhe der Fallschirmkappe (10) bis zum Scheitel (11) erfolgenden Raffens des Kappengewebes hergstellten konzentrischen Raffalten (20) besteht.

2. Fallschirm nach Anspruch 1, **dadurch gekennzeichnet, daß** jeweils eine Mehrzahl von konzentrischen Raffalten (20) durch diese umfassende Steuerleinen (19) zu einzelnen Entfaltungszonen aneinander gekoppelt sind.

3. Fallschirm nach Anspruch 2, **dadurch gekennzeichnet, daß** die Steuerleinen (19) eine unterschiedliche Bruchlast aufweisen.

4. Fallschirm nach einem der Ansprüche 1 bis 3, **dadurch gekennzeichnet, daß** die Fallschirmkappe (10) aus einen unterschiedlichen Gewebeaufbau aufweisenden Abschnitten besteht und die jeweiligen Abschnitte zu einer zugeordneten Entfaltungszone zusammengefaßt sind.

5. Fallschirm nach einem der Ansprüche 1 bis 4, **dadurch gekennzeichnet, daß** die zusammengelegten Fangleinen (13) an der jeweils untersten Raffalte (20) der einzelnen Entfaltungszonen angebunden sind.

6. Fallschirm nach einem der Ansprüche 1 bis 5, **dadurch gekennzeichnet, daß** im Scheitel (11) der Fallschirmklappe (10) eine Plattform (16) angeordnet ist.

7. Fallschirm nach Anspruch 6, **dadurch gekennzeichnet, daß** die Raffalten (20) auf der Plattform (16) abgelegt und von der Plattform (16) abrollbar sind.

8. Fallschirm nach Anspruch 6 oder 7, **dadurch gekennzeichnet, daß** auf der Plattform (16) eine Steuervorrichtung (17) zur gezielten Freigabe der Raffalten (20) angeordnet ist.

9. Fallschirm nach Anspruch 8, **dadurch gekennzeichnet, daß** an die Steuervorrichtung (17) Leinenschneider zum gesteuerten Durchtrennen der die Entfaltungszonen zusammenhaltenden Steuerleinen (19) angeschlossen sind.

10. Fallschirm nach Anspruch 8 oder 9, **dadurch gekennzeichnet, daß** die Steuervorrichtung (17) einen Strömungsmesser (18) aufweist.

11. Fallschirm nach Anspruch 8 oder 9, **dadurch gekennzeichnet, daß** die Steuervorrichtung (17) einen Datenspeicher mit darin gespeicherten, die Auslösung des Entfaltungsablaufes der Fallschirmkappe (10) bestimmenden Daten aufweist.

## Claims

1. A parachute consisting of a parachute canopy (10) having an apex (11) and a base (12) as well as rigging lines (13) attached to the base (12) for retaining the objects (15) to be decelerated by the parachute, whereby the parachute is prepared for its use by folding of its parachute canopy (10) as well as its rigging lines (13) into a reefed pack, **characterized in that** the folding of the parachute canopy (10) is comprised of a plurality of concentric gathered folds (20)obtained by gathering the canopy fabric, which is laid out in the inflated airborne shape of the parachute, across the entire circumference of the parachute canopy (10), from the base (12) to the apex (11) across the full height of the parachute canopy.

2. A parachute according to claim 1 and **characterized in that** respective ones of the concentric folds (20) of the parachute canopy are coupled by control lines (19) extending therearound into individual deployment zones.

3. A parachute according to claim 2 and **characterized in that** the control lines (19) have differing breaking strengths thereamong.

4. A parachute according to one of claims 1 - 3 and **characterized in that** the parachute canopy (10) includes a plurality of sections having different web constructions and each respective section is gathered together into a predetermined deployment zone.

5. A parachute according to claim 1 - 4 and **characterized in that** each of the rigging lines (13) associated with a respective deployment zone are attached to the lowermost fold (20) of the respective deployment zone.

6. A parachute according to claim 1 - 5 and **characterized in that** at the apex (11) of the parachute canopy (10) a platform (16) is disposed.

7. A parachute according to claim 6 and **characterized in that** the folds (20) of the parachute canopy (10)are disposed on the platform (16) and are unrollable from the platform (16).

8. A parachute according to claim 6 or 7 and **characterized in that** on the platform (16) a control apparatus (17) for targeted release of the folds (20) is disposed.

9. A parachute according to claim 8 and **characterized in that**, to the control apparatus (17), line cutters to cut the respective control lines (19) associated with a deployment zone which is to be deployed are connected.

10. A parachute according to claim 8 or 9 and characterized further in that the control apparatus (17) includes a flow measuring device (18).

11. A parachute according to claim 8 or 9 and chracterized further in that the control apparatus (17) includes a data storage device for storing data for directing the deployment process of the parachute canopy (10).

## Revendications

1. Parachute composé d'une voilure de parachute (10), présentant un sommet (11) et une base (12), ainsi que de suspentes (13) apposées à la base (12) pour maintenir l'objet (15) à freiner au moyen du parachute, le parachute présentant un empaquetage en vue de sa préparation grâce au repli de la voilure de parachute (10) ainsi que de ses suspentes (13), **caractérisé en ce que** l'empaquetage de la voilure de parachute (10) se compose de fronces (20) concentriques, constituées par le fait de froncer le tissu de voilure, en partant de la forme de vol gonflée du parachute sur toute la circonférence de la voilure de parachute (10) à partir de la base en passant par la hauteur de la voilure de parachute (10) jusqu'au sommet (11).

2. Parachute selon la revendication 1, **caractérisé en ce que** respectivement la plupart des fronces concentriques (20) sont couplées ensemble en zones individuelles d'ouverture par des cordes de manoeuvre (19) qui les entourent.

3. Parachute selon la revendication 2, **caractérisé en ce que** les cordes de manoeuvre (19) présentent une charge de rupture différente.

4. Parachute selon l'une quelconque des revendications 1 à 3, **caractérisé en ce que** la voilure de parachute (10) se compose de sections présentant une structure de tissu différente, et les sections respectives sont regroupées en une zone d'ouverture associée.

5. Parachute selon l'une quelconque des revendications 1 à 4, **caractérisé en ce que** les suspentes (13) repliées sont attachées à la fronce (20) respectivement inférieure des zones individuelles d'ouverture.

6. Parachute selon l'une quelconque des revendications 1 à 5, **caractérisé en ce qu'**une plate-forme (16) est agencée dans le sommet (11) de la voilure de parachute (10).

7. Parachute selon la revendication 6, **caractérisé en ce que** les fronces (20) sont déposées sur la plate-forme (16) et peuvent se dérouler à partir de la plate-forme (16).

8. Parachute selon la revendication 6 ou 7, **caractérisé en ce que**, sur la plate-forme (16), un dispositif de commande (17) est agencé pour libérer les fronces (20) de façon ciblée.

9. Parachute selon la revendication 8, **caractérisé en ce qu'**un coupe-corde, pour le sectionnement commandé des cordes de manoeuvre (19) rassemblant les zones d'ouverture, est connecté au dispositif de commande (17).

10. Parachute selon la revendication 8 ou 9, **caractérisé en ce que** le dispositif de commande (17) présente un rhéomètre (18).

11. Parachute selon la revendication 8 ou 9, **caractérisé en ce que** le dispositif de commande (17) présente une mémoire de données contenant des données déterminant le déclenchement de la séquence d'ouverture de la voilure de parachute (10).
